(19) Europäisches Patentamt
European Patent Office
Office européen des brevets

(11) Veröffentlichungsnummer : **0 001 800**
**B1**

(12) # EUROPÄISCHE PATENTSCHRIFT

(45) Veröffentlichungstag der Patentschrift : **24.11.82**

(51) Int. Cl.$^3$ : **C 07 C 85/18**, C 07 C 87/62, C 08 G 18/32, C 07 C 93/04

(21) Anmeldenummer : **78101211.7**

(22) Anmeldetag : **24.10.78**

(54) **Polyätherpolyole, Verfahren zu ihrer Herstellung und Verfahren zur Herstellung von Polyurethanschaumstoffen.**

(30) Priorität : **07.11.77 US 849196**

(43) Veröffentlichungstag der Anmeldung : **16.05.79 (Patentblatt 79/10)**

(45) Bekanntmachung des Hinweises auf die Patenterteilung : **24.11.82 Patentblatt 82/47**

(84) Benannte Vertragsstaaten : **BE FR GB NL**

(56) Entgegenhaltungen :
**DE-A-1 593 905**
**GB-A-1 164 277**
**GB-A-1 165 434**

(73) Patentinhaber : **Mobay Chemical Corporation**
**Penn Lincoln Parkway West**
**Pittsburgh, Pennsylvania 15205 (US)**

(72) Erfinder : **Haas, James Lynn**
**1088 Pennsbury Boulevard North**
**Pittsburgh, PA 15 205 (US)**

(74) Vertreter : **Müller, Heinz-Gerd, Dipl.-Ing. et al.**
**c/o Bayer AG Zentralbereich Patente Marken und Lizenzen**
**D-5090 Leverkusen 1, Bayerwerk (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 001 800 B1

# Polyätherpolyole, Verfahren zu ihrer Herstellung und Verfahren zur Herstellung von Polyurethanschaumstoffen

Die vorliegende Erfindung betrifft neue basische Polyätherpolyole sowie ihre Verwendung zur Herstellung von Polyurethanschaumstoffen. Die erfindungsgemäßen Polyole werden hergestellt, indem man nacheinander an Toluylendiamin Äthylenoxid und ein weiteres vicinales Alkylenoxid in einem bestimmten Mengenverhältnis anlagert.

Die Herstellung von Polyätherpolyolen durch Alkoxylierung von Aminen ist bekannt. So werden z.B. in den US-Patentschriften 3 423 344 und 3 499 009 Polyole beschrieben, welche durch Umsetzung von Diaminodiphenylmethan mit verschiedenen Alkylenoxiden erhalten wurden. Aus solchen Polyhydroxylverbindungen lassen sich harte Polyurethanschaumstoffe mit in vieler Hinsicht befriedigenden Eigenschaften herstellen ; unbefriedigend bleibt jedoch die relativ große Sprödigkeit, Oberflächenbröckligkeit und geringe Dimensionsstabilität derartiger Schaumstoffe.

Auch alkoxylierte Toluylendiamine sind im Prinzip bekannt. So wird etwa in der britischen Patentschrift 972 772 ein Polyol beschrieben, welches durch Alkoxylierung von Tetra-(β-hydroxyäthyl)-2,4-diaminotoluol erhalten wurde. Die Literaturstelle gibt jedoch keinen Hinweis darauf, in welchem Mengenverhältnis die verschiedenen Alkylenoxide eingesetzt werden müssen, damit Polyhydroxylverbindungen erhalten werden, welche zu Polyurethanschäumen mit guter Dimensionsstabilität und niedriger Bröckligkeit führen.

Es wurde nun gefunden, daß man Polyurethanschaumstoffe mit hervorragender Dimensionsstabilität, geringer Sprödigkeit, geringer Wärmeleitfähigkeit und geringer Oberflächenbröckligkeit erhält, wenn als Ausgangskomponente auf Toluolendiamin gestaltete Polyäther eingesetzt werden, bei deren Herstellung ein ganz bestimmtes Gemisch verschiedener Alkylenoxide eingesetzt wurde.

Gegenstand der Erfindung sind Polyätherpolyole auf Basis von Toluylendiamin, welche dadurch gekennzeichnet sind, daß sie durch Anlagerung von

a) 3 bis 5 Molen, vorzugsweise 4 Molen, Äthylenoxid und anschließend
b) 1 bis 5 Molen, vorzugsweise 1 bis 4,1 Molen eines vicinalen Alkylenoxids mit 3 bis 9 C-Atomen.

an 1 Mol Toluylendiamin hergestellt wurden, wobei die Gesamtmenge an Alkylenoxid zwischen 5,0 und 8,1 Mol pro Mol Toluylendiamin liegt.

Gegenstand der Erfindung ist weiterhin ein Verfahren zur Herstellung von Polyätherpolyolen auf Basis von Toluylendiamin, welches dadurch gekennzeichnet ist, daß man an 1 Mol Toluylendiamin nacheinander

a) 3 bis 5 Mole, vorzugsweise 4 Mole, Äthylenoxid und
b) 1 bis 5 Mole, vorzugsweise 1 bis 4,1 Mole eines vicinalen Alkylenoxids mit 3 bis 9 C-Atomen

anlagert, wobei die Gesamtmenge an Alkylenoxid 5,0 bis 8,1 Mole pro Mol Toluylendiamin beträgt.

Gegenstand der Erfindung ist schließlich auch ein Verfahren zur Herstellung von Polyurethanschaumstoffen durch Umsetzung von

a) Polyisocyanaten,
b) basischen Polyätherpolyolen und gegebenenfalls
c) weiteren höhermolekularen und/oder niedermolekularen Polyhydroxylverbindungen

in Gegenwart von Treibmitteln und gegebenenfalls Katalysatoren sowie weiteren an sich bekannten Zusatzstoffen, welches dadurch gekennzeichnet ist, daß als Komponente b) die erfindungsgemäßen Polyäther eingesetzt werden.

Unter « Toluylendiamin » im Sinne der vorliegenden Erfindung sind 2,4-Toluylendiamin, 2,6-Toluylendiamin und beliebige Gemische dieser beiden Verbindungen zu verstehen.

Zur Herstellung der erfindungsgemäßen Polyätherpolyole setzt man zunächst Toluylendiamin mit Äthylenoxid um und lagert an das so erhaltene Reaktionsproduckt danach ein vicinales Alkylenoxid mit mindestens 3 Kohlenstoffatomen an. Unter dem Ausdruck « vicinales Alkylenoxid mit mindestens 3 Kohlenstoffatomen » ist erfindungsgemäß ein Alkylenoxid der Formel

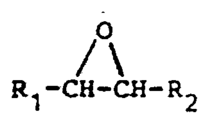

zu verstehen, in welcher

$R_1$ eine Alkylgruppe mit 1 bis 9 C-Atomen und
$R_2$ Wasserstoff oder eine Alkylgruppe mit 1 bis 6 Kohlenstoffatomen bedeuten.

Beispiele für derartige Alkylenoxide sind 1,2-Propylenoxid, 1,2-Butylenoxid, 2,3-Butylenoxid, 1,2-Heptylenoxid, 3,4-Octylenoxid, 2,3-Nonylenoxid etc. ; bevorzugt ist 1,2-Propylenoxid.

In der ersten Alkoxylierungsstufe werden, wie schon erwähnt, 3 bis 5 Mol, vorzugsweise 4 Mol, Äthylenoxid an 1 Mol des Toluylendiamins angelagert. Die Alkoxylierungsreaktion wird vorzugsweise bei einer Temperatur zwischen 100 und 220 °C, besonders bevorzugt zwischen 105 und 110 °C, bei Atmosphärendruck in einem Autoklaven oder einem ähnlichen geschlossenen Reaktionsgefäß ausgeführt.

Selbstverständlich kann auch bei niedrigeren Temperaturen gearbeitet werden ; die Reaktionszeit wird dann jedoch erheblich verlängert. Arbeitet man, wie es erfindungsgemäß bevorzugt ist, bei Atmosphärendruck, dann hält man das Reaktionsgemisch vorteilhafterweise innerhalb des oben angegebenen Temperaturbereichs und leitet das Äthylenoxid in das Reaktionsgemisch mit etwa derselben Geschwindigkeit ein, mit der es durch die Alkoxylierungsreaktion verbraucht wird. Arbeitet man bei erhöhtem Druck, dann wird das Alkylenoxid — entweder kontinuierlich oder portionsweise in einer solchen Geschwindigkeit zugesetzt, daß Reaktionstemperatur und Druck in gewünschten Bereich bleiben.

Wie gefunden wurde, läuft die Reaktion zwischen Äthylenoxid und dem Toluylendiamin auch ohne Katalysator sehr rasch ab, bis insgesamt 4 Mol Äthylenoxid pro Mol Amin verbraucht sind. Zu diesem Zeitpunkt ist jedes Wasserstoffatom an den Aminogruppen des Toluylendiamins durch eine 2-Hydroxyäthyl-Gruppe ersetzt worden. An einer Aminogruppe, welche sowohl ein Wasserstoffatom als auch eine 2-Hydroxyäthyl-Gruppe trägt, könnte Äthylenoxid theoretisch sowohl an der NH-Bindung als auch an der OH-Gruppe angelagert werden ; da jedoch die Reaktivität des Wasserstoffatoms am Stickstoff gegenüber Äthylenoxid wesentlich höher ist als jene des Wasserstoffatoms am Sauerstoff, bildet sich bei der Anlagerung von 4 Molen Äthylenoxid an 1 Mol Diamin praktisch ausschließlich das Tetra-β-hydroxyläthyl-Derivat.

Gewünschtenfalls kann die Alkoxylierungsreaktion durch beliebige an sich bekannte Katalysatoren beschleunigt werden. Beispiele hierfür sind tertiäre Amine wie Pyridin, Triäthylamin etc., Alkalimetalle wie Natrium ode Kalium un Alkalihydroxide wie Lithium-, Natrium- und Kalium- hydroxid. Im allgemeinen wendet man derartige Katalysatoren in einer Menge von 0,000 1 bis 1 Gew.-Teil, bezogen auf 100 Gew.-Teile des zu alkoxylierenden Amins, an.

Im allgemeinen ist es nicht erforderlich, die Alkoxylierungsreaktion in Gegenwart eines Lösungsmittels auszuführen. Gegebenenfalls kann jedoch selbstverständlich auch in Gegenwart eines inerten Verdünnungsmittels gearbeitet werden, um die Verteilung des Alkylenoxids im Reaktionsgemisch zu erleichtern. Beispiele für derartige inerte Lösungsmittel sind Monochlorbenzol, Dimethylformamid, Toluol und Xylol.

Das Produkt der ersten Stufe des erfindungsgemäßen Alkoxylierungsverfahrens kann gewünschtenfalls gereinigt werden ; vorzugsweise wird es jedoch ohne jede weitere Vorbehandlung in der zweiten Stufe des erfindungsgemäßen Verfahrens eingesetzt. Will man jedoch das Äthoxylierungsprodukt des Toluylendiamins nach der ersten Verfahrensstufe reinigen, so kann dies nach beliebigen bekannten Methoden geschehen. So kann man beispielsweise einen gegebenenfalls noch vorhandenen Überschuß an Äthylenoxid mittels eines Inertgasstroms (z.B. Stickstoff, Argon oder Xenon) entfernen ; wenn ein inertes organisches Losungsmittel mitverwendet wurde, kann dieses durch Destillation unter vermindertem Druck entfernt und der Destillationsrückstand z.B. durch Chromatographie, Gegenstromdestillation, etc. weiter gereinigt werden.

In der zweiten Stufe des erfindungsgemäßen Verfahrens wird das äthoxylierte Produkt des ersten Verfahrensschritts mit einem vicinalen Alkylenoxid, welches mindestens 3 C-Atome enthält, vorzugsweise bei einer Temperatur zwischen 100 und 250 °C, besonders bevorzugt zwischen 105 und 110 °C, bei Atmosphärendruck oder auch bei erhöhtem Druck, vorzugsweise in Gegenwart eines Alkoxylierungskatalysators, umgesetzt. Bei niedrigeren Reaktionstemperaturen muß wieder eine Verlängerung der Reaktionszeit in Kauf genommen werden. Wenn in der ersten Stufe des erfindungsgemäßen Verfahrens ein Katalysator eingesetzt wird, dann wendet man vorzugsweise den selben Katalysator auch für den zweiten Alkoxylierungsschritt an. Es genügt dabei im allgemeinen, direkt das rohe, noch katalysatorhaltige Äthoxylierungsprodukt einzusetzen ; der Zusatz von weiterem Katalysator ist dann im allgemeinen nicht erforderlich. Die anzuwendende Menge an Katalysator liegt im selben Bereich, wie er oben für den ersten Verfahrensschritt angegeben wurde.

In der zweiten Stufe des erfindungsgemäßen Verfahrens setzt man, wie schon erwähnt, zwischen 1 und 5,1 Mol Alkylenoxid pro Mol des äthoxylierten Diamins ein. Wenn das vicinale Alkylenoxid unsymmetrisch ist, d.h., wenn die beiden Gruppen $R_1$ und $R_2$ nicht identisch sind, kann, wie aus den folgenden Reaktionsschemata hervorgeht, die Addition des vicinalen Alkylenoxids an die OH-Bindung einer Hydroxyäthylgruppe zu zwei verschiedenen Reaktionsprodukten führen, so daß das erhaltene Alkoxylierungsprodukt ein Gemisch verschiedener Verbindungen darstellt :

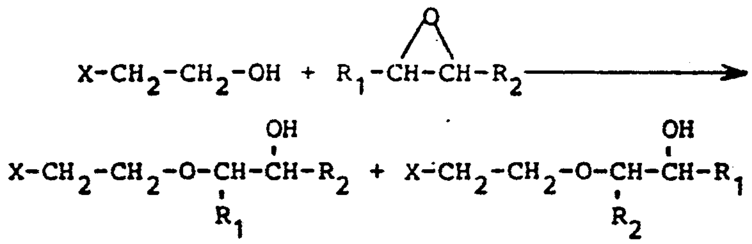

In der obigen Reaktionsgleichung steht X für den Rest des Reaktionsprodukts aus der ersten Stufe des erfindungsgemäßen Verfahrens. Selbstverständlich gilt die obige Reaktionsgleichung für alle Hydroxyäthylgruppen des äthoxylierten Toluylendiamins. Insbesondere wenn das vicinale Alkylenoxid im Überschuß über die vorhandene Menge an Hydroxyäthylgruppen aus der ersten Stufe des erfindungsgemäßen Verfahrens eingesetzt wird, dann laufen auch weitere Reaktionen des Alkylenoxids mit den freien Hydroxylgruppen der beiden oben dargestellten Reaktionsprodukte ab.

Wenn $R_2$ in der obigen Reaktionsgleichung für ein Wasserstoffatom steht, dann trägt das eine der möglichen Reaktionsprodukte eine sekundäre Hydroxylgruppe, während das andere eine endständige primäre Hydroxylgruppe aufweist. Wie gefunden wurde, bildet sich erfindungsgemäß bevorzugt das Reaktionsprodukt mit sekundären Hydroxylgruppen ; daneben liegen jedoch immer auch Isomere mit primären Hydroxylgruppen (in der Größenordnung von etwa 10 %) im Alkoxylierungsprodukt vor.

Die erfindungsgemäß erhaltenen Polyätherpolyole können in an sich bekannter Weise isoliert und gereinigt werden. Zum Beispiel läßt sich ein evtl. noch vorhandener Überschuß an vicinalem Alkylenoxid durch Spülen des Reaktionsgemisches mit einem Inertgas wir Stickstoff, Argon oder Xenon entfernen. Gegebenenfalls mitverwendete inerte organische Lösungsmittel lassen sich beispielsweise durch Destillation unter vermindertem Druck entfernen. Das Reaktionsprodukt kann gewünschtenfalls gereinigt sowie gegebenenfalls auch in die einzelnen Isomeren aufgetrennt werden, beispielsweise durch Chromatographie, Gegenstromverteilung, fraktionierte Destillation etc. oder auch durch eine Kombination dieser Verfahrenstechniken.

Die erfindungsgemäß zugänglichen Alkoxylierungsprodukte können durch die folgenden allgemeinen Formeln dargestellt werden :

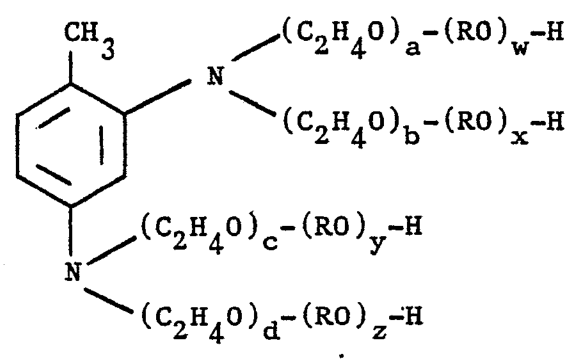

und/oder

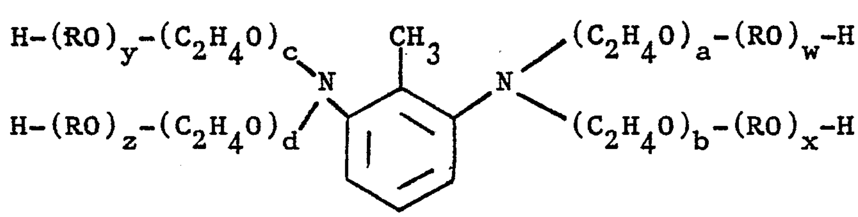

in welchen

R eine Alkylengruppe mit 3 bis 9 C-Atomen darstellt,

a, b, c, d, w, x, y und z unabhängig voneinander für ganze Zahlen zwischen 0 und 2 stehen.

Wie gefunden wurde, werden bei Einhaltung der oben angegebenen molaren Mengenverhältnisse von Toluylendiamin und den beiden Alkylenoxiden Polyätherpolyole erhalten, aus denen sich Schaumstoffe mit hervorragendem und ausgewogenem Eigenschaftsbild herstellen lassen, insbesondere hinsichtlich ihrer Bröckeligkeit, Wärmeleitfähigkeit und ihrer Dimensionsstabilität. Besonders gute Ergebnisse werden erhalten, wenn das Toluylendiamin zunächst mit ca. 4 Molen Äthylenoxid und dann mit 2 bis 4,1 Molen, besonders bevorzugt 2,5 bis 3,5 Molen, des vicinalen Alkylenoxids (besonders bevorzugt 1,2-Propylenoxid) umgesetzt wird. Je nach dem exakten Molverhältnis dieser Ausgangskomponenten läßt sich das Eigenschaftsbild der Polyurethanschaumstoffe in der einen oder anderen Richtung optimieren : so nimmt etwa mit abnehmender Molzahl des vicinalen Alkylenoxids die Dimensionsstabilität

des Polyurethanschaums zu, während mit zunehmender Molzahl des vicinalen Alkylenoxids (mehr als 3 Mol pro Mol Toluylendiamin) die Verträglichkeit des Polyäthers mit den bei der Verschäumung eingesetzten Treibmitteln wächst.

Eine weitere Eigenschaftsoptimierung läßt sich erreichen, wenn man die erfindungsgemäßen Polyole in Gemisch mit bis zu 90 Gew.-%, vorzugsweise 10 bis 80 Gew.-%, (bezogen auf gesamte Polyolkomponente) an weiteren höhermolekularen Polyhydroxylverbindungen einsetzt.

Diese gegebenenfalls mitverwendeten zusätzlichen Polyole enthalten zwischen 2 und 8 Hydroxylgruppen und sind vorzugsweise aus Alkylenoxideinheiten aufgebaut, wobei jedoch die Gesamtmenge an Äthylenoxideinheiten im gesamten Polyolgemisch weniger als 80 Gew.-%, vorzugsweise weniger als 70 Gew.-%, besonders bevorzugt weniger als 60 Gew.-%, bezogen auf die Gesamtmenge an Alkylenoxideinheiten im Polyolgemisch, betragen soll. Die optimale Menge an gegebenenfalls mitzuverwendender höhermolekularer Polyhydroxylverbindung hängt ab von der Molzahl des vicinalen Alkylenoxids, welches bei der Alkoxylierung des Toluylendiamins eingesetzt wurde, und selbstverständlich auch von dem angetrebten Eigenschaftsbild. Beispielsweise sind für die Erzielung einer optimalen Verträglichkeit der Polyolkomponente mit der Treibmittelkomponente umso geringere Mengen an zusätzlichem Polyol erforderlich, je höher der Anteil des vicinalen Alkylenoxids im erfindungsgemäßen Polyätherpolyol ist. Was die Dimensionsstabilität des Polyurethanschaumstoffs betrifft, so wird diese bei relativ hohem Anteil des vicinalen Alkylenoxids im erfindungsgemäßen Polyäther verbessert, wenn relativ viel zusätzliche Polyhydroxylverbindung bei der Verschäumungsreaktion eingesetzt wird.

Als höhermolekulare Polyhydroxylverbindungen, welche bei der Herstellung von Polyurethanschaumstoffen neben den erfindungsgemäßen Polyätherpolyolen eingesetzt werden können, kommen alle an sich bekannten derartigen Verbindungen mit einem Molekulargewicht zwischen 350 und 5 000, vorzugsweise 400 bis 3 000, besonders bevorzugt 500 bis 2 000 in Frage, wie sie in der Polyurethanchemie üblicherweise Verwendung finden. Im Prinzip können beliebige Verbindungen mit 2 bis 8 Hydroxylgruppen eingesetzt werden, wie z.B. Polyäher-, Polyester- und Polythioätherpolyole. Im allgemeinem sind im vorliegenden Zusammenhang jedoch Polyäther bevorzugt, also Polyhydroxylverbindungen, welche Alkylenoxideinheiten aufweisen. Es ist hierbei jedoch zu beachten, daß die Gesamtmenge an Äthylenoxideinheiten in der Polyolkomponente weniger als 80 % der Gesamtmenge an Alkylenoxideinheitem im Polyolgemisch beträgt. Besonders bevorzugt sind Gemische aus den erfindungsgemäßen Polyätherpolyolen mit solchen Polyätherpolyolen, welche durch Anlagerung von Propylenoxid sowie gegebenenfalls auch Äthylenoxid (im Gemisch oder nacheinander) an die verschiedensten Starter erhalten wurden. Solche Starter sind beispielsweise Wasser, Propylenglykol, Dipropylenglykol, Brenzkatechin, Resorcin, Hydrochinon, Bisphenol A, Bis-(p-hydroxyphenyl)-methan, Glycerin, Sorbit, Trimethylolpropan, 1,2,6-Hexantriol, Pentaerythrit, Saccharose, die verschiedensten Glykoside (beispielsweise Methyl-, Äthyl-, Propyl-, Butyl- oder 2-Äthylhexyl-Glykosid) von Zuckern, wie Arabinose, Xylose, Fruktose oder Glukose ; Tetramethylolcyclohexanol, 3,3,5-Tris-(hydroxymethyl)-5-methyl-4-hydroxytetrahydropyran und 3,3,5,5-Tetrakis-(hydroxymethyl)-4-hydroxytetrahydropyran ; 2,2-Bis-(hydroxy-phenyl)äthanol, Pyrogallol, Phloroglucin, Tris-(hydroxy-phenyl)alkane, Tetrakis-(hydroxyphenyl)alkane, etc.

Geeignete Polyesterpolyole, welche erfindungsgemäß gegebenenfalls bei der Herstellung von Polyurethanschaumstoffen verwendet werden können, sind beispielsweise solche aus dibasischen Carbonsäuren und mehrwertigen, vorzugsweise dreiwertigen, Alkoholen. Vorzugsweise haben die dibasischen Carbonsäuren (abgesehen von den Carboxylgruppen) keine funktionellen Gruppen mit aktiven Wasserstoffatomen und enthalten auch keine olefinischen Kohlenstoff-Kohlenstoff-Bindungen. Beispielsweise seien Phthalsäure, Terephthalsäure, Isophthalsäure, Bernsteinsäure, Glutarsäure, Adipinsäure und Pimelinsäure sowie deren Anhydride genannt. Bevorzugte Alkohole sind Trimethyloläthan, Trimethylolpropan, Mannit, Hexantriol, Glycerin und Pentaerythrit. Daneben können auch zweiwertige Alkohole wie Äthylenglykol, Diäthylenglykol, 1,2-Propylenglykol, 1,4-Butandiol und Cyclohexandiol zum Aufbau des Polyesters verwendet werden. Für die Herstellung von Hartschaumstoffen ist es jedoch zweckmäßig, daß nicht mehr als 20 % der Hydroxylgruppen der Polyesterkomponente aus einem Diol stammen. Derartige Polyester werden bisher im allgemeinen vor allem bei der Präpolymer-Verschäumungstechnik eingesetzt.

Die neuen erfindungsgemäßen Polyätherpolyole bzw. ihre Gemische mit den obengenannten zusätzlichen Polyhydroxylverbindungen sind wertvolle Ausgangsprodukte für die Herstellung von Polyurethanschaumstoffen nach an sich bekannten Verfahrenstechniken und sind den bisher für diesen Zweck eingesetzten Polyhydroxylverbindungen sowohl hinsichtlich ihrer geringen Viskosität und hohen Verträglichkeit mit anderen Ausgangskomponenten für die Schaumstoffherstellung als auch hinsichtlich der verbesserten Eigenschaften der Endprodukte überlegen.

Die Herstellung von Polyurethanschaumstoffen erfolgt erfindungsgemäß, wie bereits erwähnt, nach an sich bekannten Verfahrensweisen, wobei man anstelle der bisher eingesetzten Polyhydroxylverbindungen die erfindungsgemäßen Polyätherpolyole bzw. deren Gemische mit weiteren höhermolekularen Polyhydroxylverbindungen verwendet. Selbstverständlich können die erfindungsgemäßen Polyole auch als Ausgangskomponente bei der Herstellung von homogenen Polyurethankunststoffen dienen ; ihr Hauptverwendungszweck ist jedoch die Herstellung von geschäumten Produkten.

Die Herstellung von Polyurethanschaumstoffen aus Polyisocyanaten, Polyätherpolyolen und gegebenenfalls weiteren Polyhydroxylverbindungen in Gegenwart von Treibmitteln, Katalysatoren und gegebenenfalls weiteren Zuschlagstoffen ist dem Fachmann geläufig. In diesem Zusammenhang seien die üblichen Handbücher der Polyurethanchemie erwähnt, beispielsweise Dombrow, « Polyurethanes », Reinhold Publishing Corporation, New York (1957) Seite 1 bis 105, sowie Saunders und Frisch, « Polyurethanes », Part I, Interscience Publishers, New York (1962). Beispielsweise kann man die Polyhydroxylverbindungen mit dem Polyisocyanat in Gegenwart eines Treibmittels sowie gegebenenfalls eines Katalysators, eines oberflächenaktiven Mittels sowie gegebenenfalls weiterer Hilfsmittel umsetzen. Dies ist die sogenannte « One-shot »-Methode. Beim « Präpolymer-Verfahren » setzt man zunächst eine Polyhydroxylverbindung mit einem Überschuß an Polyisocyanat um, so daß ein Zwischenprodukt mit freien Isocyanatgruppen (ein Präpolymeres) entsteht, welches dann mit Wasser, gegebenenfalls in Gegenwart von Katalysatoren, oberflächenaktiven Substanzen und weiteren Hilfsmitteln, unter Ausbildung des Schaumstoffs umgesetzt wird. Daneben gibt es noch zahlreiche Mischvarianten zwischen diesen beiden grundsätzlichen Verfahrenstypen.

Als Isocyanatkomponente kommen erfindungsgemäß aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785, amerikanische Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphtylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenyl-sulfonyl-isocyanate gemäß der amerikanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie zum Beispiel in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385 und polymere Fettsäurereste enthaltende Polyisocyanate gemäß der amerikanischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt sind im allgemeinen jene Polyisocyanate, welche durch Phosgenierung von Mischungen von Methylenüberbrückten Polyphenyl-polyaminen erhalten werden, welche ihrerseits durch Umsetzung von Formaldehyd, Chlorwasserstoff und primären aromatischen Aminen (z.B. Anilin, o-Chlor-anilin, o-Toluidin oder deren Mischungen) zugänglich sind. Derartige Polyisocyanate werden beispielsweise in den US-Patentschriften 2 683 730, 2 950 263 und 3 012 008, der canadischen Patentschrift 665 495 und der deutschen Patentschrift 1 131 877 beschrieben. Ein besonders bevorzugtes Polyisocyanat dieser Art ist das Polymethylen-polyphenylpolyisocyanat, welches unter dem Namen® Mondur MR im Handel ist.

Will man erfindungsgemäß Hartschaumstoffe herstellen, dann kann es von Vorteil sein, neben den oben erwähnten Polyhydroxylverbindungen auch niedermolekulare, mehrwertige Polyole als Vernetzer mitzuverwenden. Derartige Polyole sollten wenigstens 3 Hydroxylgruppen aufweisen und können dem schäumfähigen Reaktionsgemisch zu jedem gewünschten Zeitpunkt zugefügt werden.

Beispiele für derartige Vernetzer sind Trimethylolpropan, Glycerin, 1,2,6-Hexantriol, Pentaerythrit, hydroxyalkylierte aliphatische Diamine wie N,N,N'N'-Tetrakis-(2-hydroxy-propyl)äthylendiamin,

N,N,N',N'-Tetrakis(2-hydroxyäthyl)-äthylendiamin und Anlagerungsprodukte von Alkylenoxiden an Zucker.

Bei der Herstellung von Polyurethanen ist es erfindungsgemäß in vielen Fällen zweckmäßig, die Reaktion zwischen Polyisocyanat und Polyhydroxylverbindungen durch Mitverwendung eines Katalysators zu beschleunigen. Für diesen Zweck können alle an sich bekannten katalytisch wirkenden Verbindungen eingesetzt werden, wie sie z.B. in Saunders-Frisch, « Polyurethanes » Part I, Interscience Publishers, New York (1962), Seite 228 bis 232, oder von Britain et al. in Journal of Applied Polymer Science, 1960, Seite 4 207 bis 4 211 beschrieben werden. Beispiele für derartige Katalysatoren sind organischen und anorganische Salze sowie organometallische Verbindungen von Wismuth, Blei, Zinn, Eisen, Antimon, Uran, Kadmium, Kobalt, Thorium, Aluminium, Quecksilber, Zink, Nickel, Cer, Molybdän, Vanadium, Kupfer, Mangan und Zirkon; daneben auch Phosphine und tertiäre Amine. Bevorzugte Katalysatoren sind erfindungsgemäß tertiäre Amine, beispielsweise Triäthylamin, Triäthylendiamin, Tetramethyläthylendiamin, Tetraäthyläthylendiamin, N-Methylmorpholin, N-Äthylmorpholin, permethyliertes Guanidin, permethyliertes 1,3-Butandiamin, N,N-Dimethyläthanolamin, N,N-Diäthyläthanolamin oder Mischungen dieser Verbindungen. Vorzugsweise wird der Katalysator in einer Menge von 0,1 bis 2,0 Gew.-%, bezogen auf gesamtes Reaktionsgemisch, eingesetzt.

Das Äquivalentverhältnis zwischen Isocyanatgruppen und aktiven Wasserstoffatomen in den schäumfähigen Reaktionsgemischen liegt erfindungsgemäß innerhalb der üblichen Bereiche. Vorteilhafterweise wird ein NCO/OH-Verhältnis zwischen 0,65 und 1,5, besonders bevorzugt zwischen 1 und 1,2, angewandt, wobei es gleichgültig ist, ob Isocyanat und Polyol über ein Präpolymeres oder in einem One-shot-Verfahren miteinander umgesetzt werden.

Die Rohdichte der erfindungsgemäß erhältlichen Polyurethanschaumstoffe kann in an sich bekannter Weise variiert werden. Vom Einfluß ist beispielsweise die Menge an Wasser, welche im schäumfähigen Reaktionsgemisch vorhanden ist, bzw. die Menge an einer leicht flüchtigen organischen Verbindung, welche als physikalisches Treibmittel wirkt. Solche Treibmittel sind inerte Flüssigkeiten mit einem Siedepunkt unter 110 °C, vorzugsweise unter 50 °C, wie beispielsweise aliphatische Kohlenwasserstoffe oder leicht flüchtige halogenierte Kohlenwasserstoffe, z.B. Trichlorfluormethan, Chlortrifluormethan, 1,1-Dichlor-1-fluoräthan, 1-Chlor-1,1-difluor-2,2-dichloräthan und 1,1,1-Trifluor-2-chlor-2-fluorbutan oder Mischungen dieser Verbindungen.

Gegebenenfalls können erfindungsgemäß bei der Herstellung von Polyurethankunststoffen auch oberflächenaktive Agenzien, Zellregulatoren, Emulgatoren, Flammschutzmittel etc. mitverwendet werden, wie sie aus der Polyurethanchemie an sich bekannt sind. So läßt sich beispielsweise eine feinere Zellstruktur der Polyurethanschaumstoffe dadurch erzielen, daß man wasserlösliche Siliconpolymere als oberflächenaktive Mittel zusetzt. Beispiele hierfür sind die handelsüblichen Blockcopolymeren, welche Polysiloxan- und Polyäthersequenzen enthalten. Um eine bessere Durchmischung der Komponenten in schäumfähigen Reaktionsgemisch zu gewährleisten, können auch weitere oberflächenaktive Mittel wie Anlagerungsprodukte von Äthylenoxid an Sorbit-Monopalmitat mitverwendet werden. Für spezielle Anwendungszwecke können dem Reaktionsgemisch auch Farbstoffe, Pigmente, Seifen, Metallpulver und andere inerte Füllstoffe beigemischt werden.

Die erfindungsgemäß zugänglichen Polyurethankunststoffe sind für eine Vielzahl von kommerziellen und industriellen Anwendungszwecken geeignet, beispielsweise für die Herstellung von Schaumisolierungen, von geformten Artikeln wie beispielsweise Sportgeräten etc.

Die folgenden Beispiele erläutern die vorliegende Erfindung. Wenn nicht anders angegeben, sind Mengenangaben als Gew.-Teile bzw. Gew.-% zu verstehen.

## Beispiel 1 bis 3

Allgemeine Arbeitsweise :

Das Toluylendiamin (80 % 2,4- ; 20 % 2,6-Isomeres) wird in einem Druckreaktor vorgelegt und unter 0,4 bis 0,5 bar Stickstoffdruck auf 105 °C erhitzt. Dann wird mit der Einleitung des Äthylenoxids begonnen. Das Äthylenoxid wird so dosiert, daß die Temperatur des Reaktionsgemisches zwischen 105 und 110 °C bleibt. Nach der Zugabe des Äthylenoxids wird das Reaktionsgemisch noch für 2 Stunden bei 105 bis 110 °C gehalten.

Danach werden 0,5 Teile (bezogen auf 100 Teile äthoxyliertes Produkt) einer 50 %igen wäßrigen Kaliumhydroxidlösung in den Reaktor eingebracht und das Wasser bei 110 °C abdestilliert. Anschließend wird mit der Einleitung des Propylenoxids begonnen, wobei das Propylenoxid wieder so dosiert wird, daß die Reaktionstemperatur zwischen 105 und 110 °C (bei einem Druck von 0,4 bis 0,5 bar Stickstoff) bleibt. Danach wird das Reaktionsgemisch noch 3 Stunden lang auf 105 °C gehalten. Das Endprodukt wird nach dem Abkühlen mit Schwefelsäure neutralisiert und vom ausgefallenen Kaliumsulfat durch Filtrieren befreit.

Die Gew.-Mengen sowie die molaren Mengenverhältnisse der Ausgangskomponenten in den Beispielen 1 bis 3 und auch die OH-Zahl des jeweiligen Reaktionsprodukts sind in der folgenden Tabelle 1 zusammengefaßt :

Tabelle 1

| Beispiel | 1 | 2 | 3 |
|---|---|---|---|
| Toluylendiamin (g) | 25.5 | 22.8 | 34.3 |
| Äthylenoxid (g) | 33.2 | 32.8 | 49.4 |
| Propylenoxid (g) | 41.2 | 44.4 | 16.3 |
| Mol-Verhältnis (TDA/ÄO/PO) | 1/3.6/3.39 | 1/4/4.1 | 1/4/1 |
| OH-Zahl | 470 | 418 | 630 |

Beispiel 4

47,7 Teile Toluylendiamin (80 % 2,4- und 20 % 2,6-Isomeres) und 68,9 Teile Äthylenoxid wurden im einem Druckreaktor 2 Tage lang bei 50 °C umgesetzt. Danach wurde das Reaktionsgemisch auf Raumtemperatur gekühlt, mit 45,4 Teilen Propylenoxid versetzt und 2 Tage bei 80 °C reagieren gelassen. Das entstehende Addukt hatte eine OH-Zahl von 540 ; das Molverhältnis der Ausgangskomponenten (TDA/Äthylenoxid/Propylenoxid) betrug 1/4/2.

Beispiel 5 bis 20

Die Polyäther aus den Beispielen 1 bis 4 wurden zur Herstellung von Polyurethanschäumen eingesetzt. Die dabei angewandten Rezepturen sind in Tabelle 2 zusammengefaßt.

Die verschiedenen Ausgangskomponenten (erfindungsgemäßer Polyäther, oberflächenaktives Mittel, Katalysator, gegebenenfalls weiteres Polyol sowie Flammschutzmittel, Treibmittel und Wasser) wurden in einem zylindrischen Kartongefäß intensiv vermischt. Danach wurde die angegebene Menge an Polyisocyanat eingerührt. Das flüssige Reaktionsgemisch wurde danach in eine offene Form mit den Dimensionen 33 × 33 × 15 cm gegossen und frei aufschäumen gelassen. Die Oberflächenbröckligkeit wurde 30 Minuten nach Beginn der Verschäumungsreaktion bestimmt. Die entsprechenden Ergebnisse sind in Tabelle 3 zusammengefaßt. Daneben wurden noch die in Tabelle 3 angegebenen weiteren physikalischen Eigenschaften bestimmt.

Die in Tabelle 3 aufscheinenden Ausdrücke sind wie folgt zu verstehen :

1. Mischzeit :
   jene Zeitdauer, während der das Reaktionsgemisch nach dem Zusatz des Isocyanats gerührt wird.
2. Startzeit :
   jene Zeitdauer (gerechnet vom Beginn der Mischzeit), nach welcher das Reaktionsgemisch beginnt, eine cremige Konsistenz anzunehmen.
3. Gelierzeit :
   jene Zeitdauer, nach welcher (gerechnet vom Beginn der Mischzeit) der Schaum so weit verfestigt ist, daß ein Glasstab mit einem Durchmesser von 3,2 mm, welcher 5 cm tief in den Schaum eingedrückt, wird, einen 15 cm langen Faden mit sich zieht, wenn er rasch aus dem Schaum herausgezogen wird.
4. Aushärtezeit :
   jene Zeitdauer (gerechnet vom Beginn der Mischzeit), nach welcher eine trockene, saubere Holzspatel, mit welcher die Schaumoberfläche leicht berührt wird, wieder entfernt werden kann, ohne daß der Schaum kleben bleibt.
5. Steigzeit :
   jene Zeitdauer (gerechnet vom Beginn der Mischzeit), nach welcher der Schaum seine endgültige Höhe erreicht hat.
6. Oberflächenbröckligkeit :
   hierunter ist die Eigenschaft der Schaumoberfläche zu verstehen, zu Pulver zu zerfallen, wenn sie mit einer Holzspatel oder dem Fingernagel leicht zusammengedrückt oder angekratzt wird.

Diese Eigenschaft wird durch die folgenden Beurteilungen I bis V charakterisiert :

I : Die Schaumoberfläche zeigt 30 Minuten nach dem Verschäumungsbeginn keinerlei Bröckligkeit.

II : Die Schaumoberfläche bröckelt nur in einer Tiefe bis zu 0,7 mm, wenn sie angekratzt wird.

III : Die Schaumoberfläche bröckelt (30 Minuten nach dem Beginn der Verschäumungsreaktion) nicht tiefer als 1,5 mm ab, wenn sie angekratzt wird.

IV : Die Schaumoberfläche bröckelt (nach einer Zeit von 30 Minuten nach dem Beginn der Verschäumungsreaktion) nur bis zu einer Dicke von höchstens 3 mm ab, wenn sie angekratzt wird.

V : Die Schaumoberfläche bröckelt in einer Dicke von mehr als 3 mm ab.

Folgende Ausgangsmaterialien wurden eingesetzt :

R-8 020 ist ein Gemisch aus 80 % Dimethyläthanolamin und 20 % Triäthylendiamin.

DC 193 ist ein handelsüblicher Schaumstabilisator auf Siliconbasis der Firma Dow-Corning Corporation.

R 11 B ist Freon®.

Fyrol 6 ist O,O-Diäthyl-N,N-bis-(2-hydroxyäthyl)aminomethylphosphonat.

Polyol A ist ein auf Äthylendiamin gestarteter Polyäther mit einer OH-Zahl von 630.

Polyol B ist ein auf Äthylendiamin gestarteter Polyäther mit einer OH-Zahl von 470.

Polyol C ist ein Saccharosepolyäther mit einer OH-Zahl von 460.

Polyol D ist ein Saccharosepolyäther mit einer OH-Zahl von 380.

Polyol E ist ein auf Diaminodiphenylmethan gestarteter Polyäther mit einer OH-Zahl von 410.

Als Isocyanat wurde ein rohes Polyphenylpolymethylen-polyisocyanat eingesetzt, welches ca. 50 % an Diphenylmethandiisocyanat enthält und einen NCO-Gehalt von 32 % aufweist.

Die relativ schlechten Bröckligkeitseigenschaften der Schäume aus Beispiel 6 und 11 sind auf die Mitverwendung des Flammschutzmittels und/oder des Polyols C zurückzuführen. Konventionelle Schaumstoffe erhalten im allgemeinen die Beurteilung III-V.

Tabelle 2

| Beispiel | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|
| Polyäther aus Beispiel 1 | 100 | 90 | 80 | 70 | 80 | 70 | 70 | – | – | – | – | – | – | – | – | – |
| Polyäther aus Beispiel 2 | – | – | – | – | – | – | – | 100 | 90 | 70 | 70 | 70 | – | – | – | – |
| Polyäther aus Beispiel 3 | – | – | – | – | – | – | – | – | – | – | – | – | 20 | 20 | 20 | – |
| Polyäther aus Beispiel 4 | – | – | – | – | – | – | – | – | – | – | – | – | – | – | – | 20 |
| R 80 20 | 1.0 | 1.0 | 1.0 | 1.0 | 1.0 | 1.0 | 1.0 | 1.5 | 1.5 | 1.5 | 1.5 | 1.5 | 1.0 | 1.0 | 1.0 | 1.0 |
| DC193 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| R-11B | 30 | 30 | 30 | 30 | 30 | 30 | 30 | 30 | 30 | 30 | 30 | 30 | 30 | 30 | 30 | 30 |
| Fyrol 6 | – | 10 | 10 | 10 | 10 | 10 | 10 | – | 10 | 10 | 10 | 10 | 10 | 10 | 10 | 10 |
| $H_2O$ | – | 0.5 | 0.5 | 0.5 | 0.5 | 0.5 | 0.5 | – | 0.5 | 0.5 | 0.5 | 0.5 | 0.5 | 0.5 | 0.5 | 0.5 |
| Polyol A | – | – | 10 | 20 | – | – | – | – | – | – | 20 | – | – | – | – | – |
| Polyol B | – | – | – | – | 10 | 20 | – | – | – | 20 | – | – | – | – | – | – |
| Polyol C | – | – | – | – | – | – | 20 | – | – | – | – | 20 | – | 70 | – | – |
| Polyol D | – | – | – | – | – | – | – | – | – | – | – | – | 70 | – | – | 70 |
| Polyol E | – | – | – | – | – | – | – | – | – | – | – | – | – | – | 70 | – |
| Isocyanat | 120 | 128 | 132 | 136 | 128 | 129 | 127 | 103 | 112 | 116 | 123 | 114 | 117 | 131 | 126 | 112 |

Tabelle 2 (Fortsetzung)

| Beispiel | 21 | 22 | 23 | 24 | 25 | 26 |
|---|---|---|---|---|---|---|
| Polyäther aus Beispiel 1 | 100 | 80 | 80 | 80 | – | 50 |
| Polyäther aus Beispiel 2 | 1,1 | 1,1 | 0,9 | 1,1 | 1,3 | 1,3 |
| R 80 20 | 1,5 | 1,5 | 1,5 | 1,5 | 1,5 | 1,5 |
| R-11B | 40 | 40 | 40 | 40 | 40 | 40 |

Tabelle 2 (Fortsetzung)

| Beispiel | 21 | 22 | 23 | 24 | 25 | 26 |
|---|---|---|---|---|---|---|
| $H_2O$ | 1,2 | 1,2 | 1,2 | 1,2 | 1,2 | 1,2 |
| Polyol C | – | – | – | – | 100 | 50 |
| Polyol D | – | 20 | – | – | – | – |
| Polyol F | – | – | 20 | – | – | – |
| Polyol G | – | – | – | 20 | – | – |
| Isocyanat X | 128 | – | – | – | – | – |
| Isocyanat Y | – | 128 | 133 | 132 | 131 | 131 |

Polyol F ist ein auf Triäthanolamin gestartetes Polypropylenoxid (OH-Zahl : 500)
Polyol G ist ein auf Glycerin gestartetes Polypropylenoxid (OH-Zahl : 450)
Isocyanat X ist ein Semipräpolymer mit einem NCO-Gehalt von 34 % aus Polyol C und Toluylendiisocyanat (80 % 2,4- und 20 % 2,6-Isomeres)
Isocyanat Y ist ein Gemisch aus 80 % Isocyanat X und 20 % Polyphenylpolymethylen-Polyisocyanat (NCO-Gehalt : 33 %).

(Siehe die Tabelle 3, Seite 11)

Tabelle 3

| Beispiel | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|
| Mischzeit (sec) | 10 | 10 | 10 | 10 | 10 | 10 | 10 | – | – | – | – | – | – | – | – | 15 | 10 | 10 | 10 | 10 | 10 | 10 |
| Startzeit | 25 | 31 | 20 | 18 | 21 | 18 | 29 | 25 | 21 | 14 | 15 | 26 | 35 | 35 | 25 | 36 | 20 | 18 | 15 | 20 | 30 | 25 |
| Gelierzeit | 80 | 96 | 67 | 54 | 72 | 59 | 122 | 67 | 74 | 49 | 52 | 92 | 110 | 175 | 110 | 135 | 90 | 102 | 78 | 108 | 150 | 108 |
| Aushärtezeit | 123 | 168 | 95 | 67 | 102 | 77 | 226 | 95 | 118 | 75 | 68 | 156 | 180 | 290 | 155 | 234 | 110 | 130 | 90 | 120 | 180 | 130 |
| Steigzeit | 160 | 215 | 150 | 120 | 145 | 130 | 265 | 135 | 160 | 100 | 100 | 200 | 220 | 325 | 220 | 305 | 102 | 120 | 86 | 115 | 170 | 117 |
| Oberflächenbröckligkeit | I | III | II | I | I | I | III | I | I | I | I | I | I | I | I | I | II | I | I | I | III | I |
| Dichte (ASTM 1622-70) (Mg/m³) | 32.84 | 29.48 | 30.44 | 31.08 | 29.64 | 29.32 | 29.64 | 32.04 | 30.60 | 27.07 | 28.84 | 30.92 | 30.44 | 32.04 | – | 32.36 | 25.63 | 25.63 | 28.84 | 27.71 | 26.91 | 27.33 |
| % geschlossene Zellen.(ASTM D 2856-70) | 90.8 | 89.9 | 90.7 | 90.7 | 90.7 | 90.6 | 89.5 | 92.0 | 91.9 | 89.9 | 92.1 | 91.8 | 89.1 | 23.5 | 90.4 | 88.8 | 90.3 | 90.3 | 91.0 | 89.6 | 89.3 | 90.5 |
| Stauchhärte (ASTM D-1621-64) in M.Pa | | | | | | | | | | | | | | | | | | | | | | |
| 1. parallel | 0,342 | 0,290 | 0,332 | 0,359 | 0,314 | 0,299 | 0,270 | 0,317 | 0,228 | 0,219 | 0,276 | 0,257 | 0,238 | 0,199 | – | 0,257 | 0,208 | 0,221 | 0,231 | 0,256 | 0,262 | 0,272 |
| 2. senkrecht | 0,101 | 0,081 | 0,086 | 0,092 | 0,078 | 0,077 | 0,076 | 0,116 | 0,100 | 0,068 | 0,099 | 0,102 | 0,092 | 0,112 | – | 0,128 | 0,087 | 0,088 | 0,092 | 0,102 | 0,105 | 0,109 |
| Dimensionsstabilität (ASTM D-2126-71) in Vol.% bei −30 °C | | | | | | | | | | | | | | | | | | | | | | |
| 1 Tag | + 0,39 | + 0,06 | + 0,46 | + 0,30 | + 0,46 | + 0,13 | − 0,12 | – | – | – | – | – | − 1,1 | – | – | + 0,4 | − 0,4 | − 0,4 | − 0,2 | − 0,2 | − 0,2 | − 0,2 |
| 7 Tage | − 0,33 | + 0,26 | + 0,39 | + 0,59 | + 0,13 | + 0,27 | − 0,31 | – | – | – | – | – | 0 | – | – | + 0,5 | − 0,4 | − 0,4 | − 0,2 | − 0,3 | − 0,2 | − 0,2 |
| 14 Tage | − 0,26 | 0 | + 1,76 | + 1,98 | + 1,56 | + 1,46 | − 0,44 | – | – | – | – | – | − 1,3 | – | – | + 0,5 | | | | | | |
| Dimensionsstabilität (ASTM D-2126-71) in Vol.% bei 70 °C und 100 rel. Luftfeuchtigkeit | | | | | | | | | | | | | | | | | | | | | | |
| 1 Tag | 5,63 | 5,67 | 4,11 | 3,00 | 6,42 | 4,12 | 7,13 | 14,1 | 13,1 | 19,7 | 7,1 | 8,9 | 10,3 | – | – | 10,2 | 12,5 | 10,2 | 10,6 | 6,8 | 4,3 | 4,0 |
| 7 Tage | 7,40 | 7,53 | 4,38 | 3,77 | 7,74 | 5,92 | 7,75 | 20,1 | 24,9 | 22,0 | 9,5 | 16,9 | 11,9 | – | – | 24,7 | 20,1 | 23,5 | 17,5 | 10,7 | 7,3 | 6,5 |
| 14 Tage | 11,20 | 10,11 | 8,76 | 6,59 | 12,69 | 10,98 | 11,81 | 26,9 | 32,7 | 33,5 | 11,4 | 22,8 | 12,8 | – | – | 30,9 | | | | | | |
| bei 100 °C und Umgebungsfeuchtigkeit | | | | | | | | | | | | | | | | | | | | | | |
| 1 Tag | 2,05 | 1,08 | 1,19 | 0,95 | 1,37 | 1,10 | 1,33 | 8,9 | 6,1 | 4,6 | 2,1 | 3,0 | 1,1 | – | – | 2,1 | 7,1 | 8,2 | 2,6 | 1,8 | 1,3 | 1,0 |
| 7 Tage | 4,04 | 2,66 | 3,24 | 3,05 | 3,46 | 3,86 | 4,00 | 10,8 | 10,7 | 14,3 | 4,3 | 8,5 | 5,0 | – | – | – | 13,6 | 14,5 | 10,0 | 5,3 | 2,6 | 3,0 |
| 14 Tage | 8,94 | 5,22 | 4,56 | 3,44 | 9,30 | 10,09 | 7,19 | – | – | – | – | – | 6,0 | – | – | 3,6 | | | | | | |
| Wärme leitzahl $\left[\frac{W}{m. °K}\right]$ | | | | | | | | | | | | | | | | | 0,016 | 0,017 | 0,017 | 0,017 | 0,019 | 0,019 |

**Ansprüche**

1. Polyätherpolyole auf Basis von Toluylendiamin, dadurch gekennzeichnet, daß sie durch Anlagerung von

a) 3 bis 5 Molen Äthylenoxid und anschließend
b) 1 bis 5 Molen eines vicinalen Alkylenoxids mit 3 bis 9 C-Atomen

an 1 Mol Toluylendiamin hergestellt wurden, wobei die Gesamtmenge an Alkylenoxid zwischen 5,0 und 8,1 Mol pro Mol Toluylendiamin liegt.

2. Polyäther nach Anspruch 1, dadurch gekennzeichnet, daß sie durch Anlagerung von

a) 4 Molen Äthylenoxid und anschließend
b) 2 bis 4,1 Molen des vicinalen Alkylenoxids

an 1 Mol Toluylendiamin hergestellt wurden.

3. Polyäther nach Anspruch 1 und 2, dadurch gekennzeichnet, daß sie durch Anlagerung von

a) 4 Molen Äthylenoxid und anschließend
b) 2,5 bis 3,5 des vicinalen Alkylenoxids

an 1 Mol Toluylendiamin hergestellt wurden.

4. Polyäther nach Anspruch 1 bis 3, dadurch gekennzeichnet, daß das vicinale Alkylenoxid 1,2-Propylenoxid ist.

5. Polyäther nach Anspruch 1, dadurch gekennzeichnet, daß sie den allgemeinen Formeln

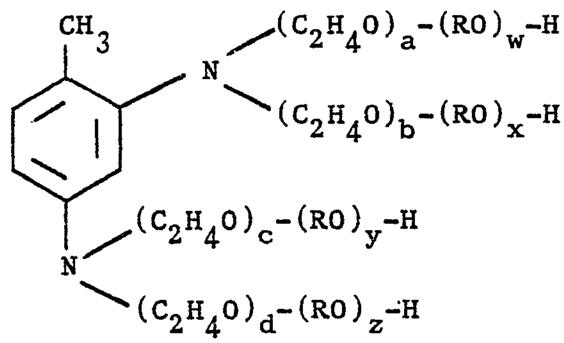

und/oder

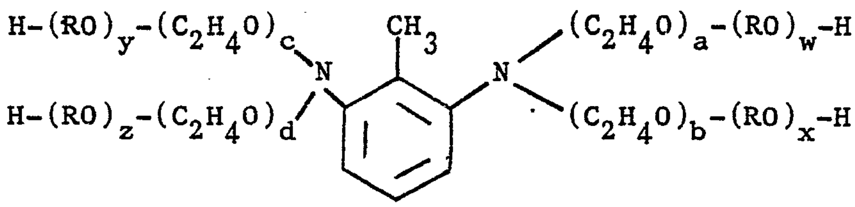

entsprechen, in welchen
R eine Alkylengruppe mit 3 bis 9 C-Atomen darstellt und
a, b, c, d, w, x, y und z unabhängig voneinander für ganze Zahlen zwischen 0 und 2 stehen.

6. Polyäther nach Anspruch 5, dadurch gekennzeichnet, daß R für eine 1,2-Propylengruppe steht.

7. Verfahren zur Herstellung von Polyätherpolyolen nach Anspruch 1 bis 6, dadurch gekennzeichnet, daß man an 1 Mol Toluylendiamin nacheinander

a) 3 bis 5 Mole Äthylenoxid und
b) 1 bis 5 Mole eines vicinalen Alkylenoxids mit 3 bis 9 C-Atomen

anlagert, wobei die Gesamtmenge an Alkylenoxid 5,0 bis 8,1 Mole pro Mol Toluylendiamin beträgt.

8. Verfahren zur Herstellung von Polyurethanschaumstoffen durch Umsetzung von

a) Polyisocyanaten,
b) basischen Polyätherpolyolen und gegebenenfalls
c) weiteren höhermolekularen und/oder niedermolekularen Polyhydroxylverbindungen

in Gegenwart von Treibmitteln und gegebenenfalls Katalysatoren sowie weiteren an sich bekannten Zusatzstoffen, dadurch gekennzeichnet, daß als Komponente b) Polyäther gemäß Anspruch 1 bis 6 eingesetzt werden.

## Claims

1. Polyether polyols based on toluylene diamine, characterised in that they have been prepared by adding

a) 3 to 5 mols of ethylene oxide and then
b) 1 to 5 mols of a vicinal alkylene oxide having 3 to 9 C-atoms

to 1 mol of toluylene diamine, the total quantity of alkylene oxide being from 5.0 to 8.1 mols per mol of toluylene diamine.

2. Polyethers according to claim 1, characterised in that they have been prepared by adding

a) 4 mols of ethylene oxide and then
b) 2 to 4.1 mols of the vicinal alkylene oxide

to 1 mol of toluylene diamine.

3. Polyethers according to claim 1 and 2, characterised in that they have been prepared by adding

a) 4 mols of ethylene oxide and then
b) 2.5 to 3.5 of the vicinal alkylene oxide

to 1 mol of toluylene diamine.

4. Polyethers according to claim 1 to 3, characterised in that the vicinal alkylene oxide is 1,2-propylene oxide.

5. Polyethers according to claim 1, characterised in that they correspond to the general formulae

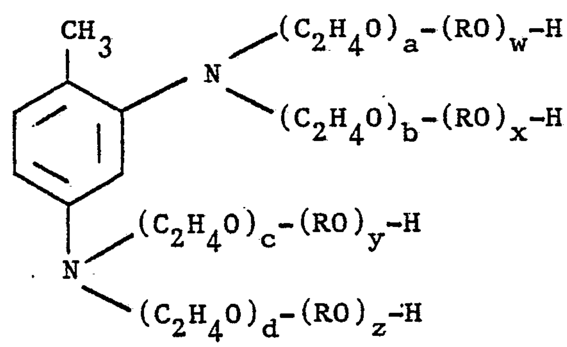

and/or

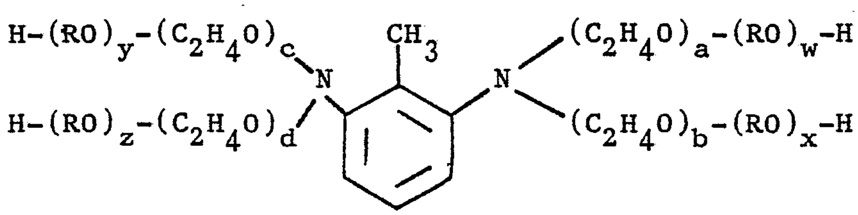

in which
R represents an alkylene group with 3 to 9 C-atoms and
a, b, c, d, w, x, y and z independently of one another represent integers from 0 to 2.

6. Polyethers according to claim 5, characterised in that R represents a 1,2-propylene group.

7. Process for the production of polyether polyols according to claim 1 to 6, characterised in that

a) 3 to 5 mols of ethylene oxide and
b) 1 to 5 mols of a vicinal alkylene oxide having 3 to 9 C-atoms

are sequentially added to 1 mol of toluylene diamine, the total quantity of alkylene oxide being 5.0 to 8.1 mols per mol of toluylene diamine.

8. Process for the production of polyurethane foams by reacting

a) polyisocyanates,
b) basic polyether polyols and optionally
c) other higher molecular and/or low molecular polyhydroxy compounds

in the presence of blowing agents and optionally catalysts as well as other known additives, characterised in that polyethers according to claim 1 to 6 are employed as component b).

**Revendications**

1. Polyéthers-polyols à base de toluylène-diamine, caractérisés en ce qu'on les prépare en fixant, par addition :

a) 3 à 5 moles d'oxyde d'éthylène, puis
b) 1 à 5 moles d'un oxyde d'alkylène vicinal contenant 3 à 9 atomes de carbone

sur 1 mole de toluylène-diamine, la quantité totale d'oxyde d'alkylène se situant entre 5 et 8,1 moles par mole de toluylène-diamine.

2. Polyéthers suivant la revendication 1, caractérisés en ce qu'on les prépare en fixant, par addition :

a) 4 moles d'oxyde d'éthylène, puis
b) 2 à 4,1 moles de l'oxyde d'alkylène vicinal

sur 1 mole de toluylène-diamine.

3. Polyéthers suivant les revendications 1 et 2, caractérisés en ce qu'on les prépare en fixant, par addition :

a) 4 moles d'oxyde d'éthylène, puis
b) 2,5 à 3,5 moles de l'oxyde d'alkylène vicinal

sur 1 mole de toluylène-diamine.

4. Polyéthers suivant les revendications 1 à 3, caractérisés en ce que l'oxyde d'alkylène vicinal est l'oxyde de 1,2-propylène.

5. Polyéthers suivant la revendication 1, caractérisés en ce qu'ils répondent aux formules générales :

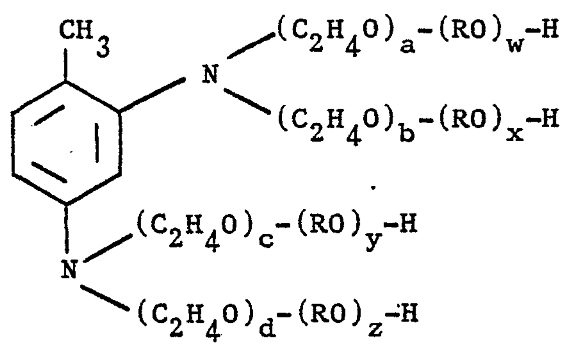

et/ou

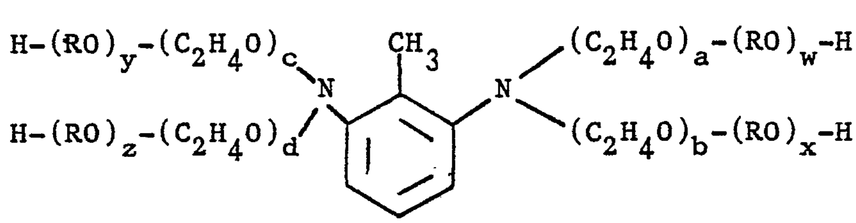

où

R représente un groupe alkylène contenant 3 à 9 atomes de carbone, tandis que

a, b, c, d, w, x, y et z représentent, indépendamment l'un de l'autre, des nombres entiers compris entre 0 et 2.

6. Polyéthers suivant la revendication 5, caractérisés en ce que R représente un groupe 1,2-propylène.

7. Procédé de préparation de polyéthers-polyols suivant les revendications 1 à 6, caractérisé en ce qu'on fixe successivement, par addition, sur 1 mole de toluylène-diamine :

a) 3 à 5 moles d'oxyde d'éthylène, et
b) 1 à 5 moles d'un oxyde d'alkylène vicinal contenant 3 à 9 atomes de carbone,

la quantité totale d'oxyde d'alkylène étant de 5 à 8,1 moles par mole de toluylène-diamine.

8. Procédé de fabrication de mousses de polyuréthanes par réaction :

a) de polyisocyanates,
b) de polyéthers-polyols basiques et éventuellement
c) d'autres composés polyhydroxy de poids moléculaire élevé et/ou de faible poids moléculaire,

en présence d'agents moussants et éventuellement de catalyseurs, ainsi que d'autres additifs connus en soi, caractérisé en ce que, comme composant (b), on utilise des polyéthers suivant les revendications 1 à 6.